# EUROPEAN PATENT APPLICATION

(11) **EP 4 822 653 A1**
(43) Date of publication of application: **14.10.2026**
(21) Application number: 26164913.1
(22) Date of filing: 16.03.2026
(51) Int. Cl.: G06V 10/82, G06V 10/764, G06V 10/766, G06V 10/774

(54) **TARGET TAILORING FOR OBJECT DETECTION**

(30) Priority: 08.04.2025 US 202519173085
(71) Applicant: Honeywell International Inc., Charlotte, NC 28202 (US)
(72) Inventor: BILEK, Jan, Charlotte, 28202 (US); EICHLER, Zdenek, Charlotte, 28202 (US); CAGAS, Martin, Charlotte, 28202 (US)
(74) Representative: Haseltine Lake Kempner LLP

(57) **Abstract**

A system, comprises at least one processor configured to: receive, into a large language model, a natural language description of a new object type not yet included in a previously trained object detection model for detecting objects in images; generate, based on the natural language description of the new object type and using at least one image generating generative artificial intelligence model, an image dataset including visual examples of the new object type; perform additional training of the previously trained object detection model using the image dataset including the visual examples of the new object type to fine-tune the previously trained object detection model to generate a fine-tuned object detection model capable of detecting the new object type in the images; and provide the fine-tuned object detection model to systems for use in detecting the new object type in newly acquired images.

## Description

### BACKGROUND

Automated object detection systems and methodologies can be used to detect objects.

### SUMMARY

A system, comprises: at least one processor; at least one memory communicatively coupled to the at least one processor; and wherein the at least one processor is configured to: receive, into a large language model, a natural language description of a new object type not yet included in a previously trained object detection model for detecting objects in images; generate, based on the natural language description of the new object type and using at least one image generating generative artificial intelligence model, an image dataset including visual examples of the new object type; perform additional training of the previously trained object detection model using the image dataset including the visual examples of the new object type to fine-tune the previously trained object detection model to generate a fine-tuned object detection model capable of detecting the new object type in the images; and provide the fine-tuned object detection model to systems for use in detecting the new object type in newly acquired images.

A method for fine-tuning object detection models, the method comprises: receiving, into a large language model, a natural language description of a new object type not yet included in a previously trained object detection model for detecting objects in images; generating, based on the natural language description of the new object type and using at least one image generating generative artificial intelligence model, an image dataset including visual examples of the new object type; performing additional training of the previously trained object detection model using the image dataset including the visual examples of the new object type to fine-tune the previously trained object detection model to generate a fine-tuned object detection model capable of detecting the new object type in the images; and providing the fine-tuned object detection model to systems for use in detecting the new object type in newly acquired images.

A non-transitory computer-readable medium comprising a set of instructions that, when executed by at least one processor, cause the at least one processor to: receive, into a large language model, a natural language description of a new object type not yet included in a previously trained object detection model for detecting objects in images; generate, based on the natural language description of the new object type and using at least one image generating generative artificial intelligence model, an image dataset including visual examples of the new object type; perform additional training of the previously trained object detection model using the image dataset including the visual examples of the new object type to fine-tune the previously trained object detection model to generate a fine-tuned object detection model capable of detecting the new object type in the images; and provide the fine-tuned object detection model to systems for use in detecting the new object type in newly acquired images.

### BRIEF DESCRIPTION OF DRAWINGS

Understanding that the drawings depict only exemplary embodiments and are not therefore to be considered limiting in scope, the exemplary embodiments will be described with additional specificity and detail through the use of the accompanying drawings, in which:
Figure 1 is a block diagram illustrating example computing system(s).
Figure 2 is a block diagram showing functional components of a system for fine-tuning an object detection model.
Figure 3 is a block diagram showing functional components of an example system for fine-tuning an object detection model.
Figure 4 is an example method for fine-tuning an object detection model.
Figure 5 is a block diagram showing functional components of a system.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

In examples, object detection capabilities can be enhanced using target tailoring. In examples, object detection models and artificial intelligence (AI) driven approaches to object detection may have a camera on a vehicle. In examples, properties of the camera are understood. In examples, it is known what objects are being searched. In examples, an AI based object detection model is trained using a large set of examples presented to the model. In examples, the object detection model is configured to tune itself based on experience detecting objects provided in the numerous examples.

In examples, image generative AI models can be used to enable the object detection based only on brief description(s) of search target(s). In examples, a fully automated detector preparation pipeline takes the short object description in natural language format and outputs the adjusted detection model ready to be used in the operating vehicle. In examples, a high-fidelity synthetic training dataset is created and used for the object detection model fine-tuning. In examples, a combination of multiple generation approaches and quality assessment ensures good fine-tuning results. In examples, fine-tuning of low-rank model (LoRA) layers allows a decrease in the data size required for transfer, enabling in-the-field detection capability updates with minimal requirements on connectivity.

In examples, improvements in systems and methods described herein may include: (1) automated object detection of targets based on their brief description; (2) elimination of the need to have an extensive recorded dataset based on real images prior the object detection model training; (3) mitigation of uncertainty in target object appearance by training on large set of appearance variations that meet key criteria; (4) utilization of multiple concurrent training sample generation methods to avoid potential use-case specific generation issues and increase system versatility; (5) in-the-field object detection model update based on natural language target description; and (6) automation scalability to the point of the full automation.

In examples, search and rescue and aerial reconnaissance missions are performed with aircraft (such as helicopters, drones, airplanes, or other aerial vehicles) or other vehicles equipped with cameras that increase the search efficiency with zooming, stabilization, infrared (IR) imaging, and other helpful properties, including automated image processing for object detection.

In examples, progress in the field of Artificial Intelligence (AI) and machine learning allows previously used rigid image processing algorithms to be replaced by AI models trained for object detection. In examples, these object detection models are based on a Convolutional Neural Network (CNN) or Transformer architectures. In examples, these object detection models are trained on extensive datasets that include large numbers of images for each object type the model is expected to detect. In examples, these object detection models work well for most common objects, such as persons and vehicles. In examples, the detections variety and/or adjustability of these object detection models can be limited due to the requirement of the large training dataset.

In examples, object detection systems (such as AI-based object detection systems) are limited to the detection of known targets. In examples, many (such as hundreds) of target object image samples are necessary for a well-performing AI object detection model, which limits the introduction of new detection targets, especially for cases with no or minimal previously documented occurrence of the targets. In examples, this makes object detection models of little use in many cases of reconnaissance or search and rescue missions where the target object often does not fall in one of the pretrained categories.

In examples, limitations are seen when a mission objective does not fall into any of the pre-trained categories or when the mission objective requires more specific search criteria than the trained model can distinguish. In examples, the complex and/or unusual search criteria includes an area or location of environmental incident, disaster, or infrastructure issue. In examples, the incident can vary from spilled chemicals, dead animals, a wreckage, a fallen power pole, a landslide, a road washout, and/or heat or radiation sources. In examples, the complex and/or unusual search criteria includes hostile forces which are using a new type of camouflage to avoid detection by currently used object detection systems. In examples, the complex and/or unusual search criteria includes a new unit deployed by the opponent when only the vague description is available. In examples, the complex and/or unusual search criteria includes a location based on a communication recording or a wiretap recording that identified only some of its properties (e.g., building with metal roof and transformer pole in immediate vicinity). In examples, these limitations can cause the object detection system to not offer applicable search option, to be likely to fail to locate the required object, and/or to invalidate the results with a very high number of false positives.

In examples, to more successfully handle these and other similar situations, the object detection model is adjusted based on the simple text description of the object of interest. In examples, an automated pipeline for the object detection model fine-tuning takes a brief text description in natural language as the input and provides the fine-tuned object detection model as the output. In examples, fine-tuning refers to training an already-trained neural network (NN) further to improve its accuracy. In examples, it is not necessary to update the weights of the entire neural network, but only the weights of last several layers. In examples, the approach to update only several last layers is called Low-rank Adaptation (LoRA). In examples, updating the weights of only the last few (such as 3-5) layers of a NN neural network brings sufficient improvement without the time and memory/storage space requirements to fine-tune the entire neural network. In examples, the last several layers can be separated from the rest of the neural network and into separate programmed hardware, allowing for quick in-the-field updates in case the mission objective changes, while maintaining relatively low bandwidth requirements on the receiving end, as well as low training time requirements.

In examples, this fine-tuned object detection model can be used for various object detection scenarios, including with head-mounted hardware or on vehicles in military and civilian application. In examples, cloud computing can be used for a secure, scalable infrastructure for collecting, aggregating, and storing data. In examples, cloud computing allows connected devices to communicate and can enable Software as a Service (SaaS), Infrastructure as a Service (IaaS), Platform as a Service (PaaS), and/or data lakes (centralized repositories of structured and/or unstructured data). In examples, connectivity may be provided through cloud, direct, and/or remote connection. In examples, the infrastructure may enable connected services (such as an Internet of Things (IoT) platform). In examples, various data is captured and generated. In examples, images are recorded from the target device and generated and/or rendered as synthetic training data (stored in an operations center). In examples, fine-tuned neural networks is stored in an operations center and copied to target devices to be used for object detection. In examples, three dimensional (3D) models (stored in an operations center) are provided or generated for synthetic dataset creation.

In examples, a model adjustment pipeline can take a text description in natural language form as an input and through a series of fully automated steps provide a fine-tuned object detection model capable of identifying the described objects in the image stream from the vehicle's camera. In examples, this differs from previous approaches in the use of a synthetic dataset created using artificial intelligence (AI) image generation models run in parallel. In examples, this offers the unique capability of adjusting the object detection model shortly prior to a mission (or even while in the field), thereby adding mission-critical capability to image detection systems.

In examples, constraints in the process for image generation include knowing what the environment is, knowing variability within the environment, and knowing what object types you will be looking for. In examples, a mission results in a system searching for a specific object, such as a specific person, a specific vehicle, a specific river crossing, etc. In examples, the dataset for the object may include the object in a huge number of varieties. In examples, the dataset may include hundreds or thousands of images of the object. In examples, a sufficiently high number of images of the object within the environment will best train the image detection model. In examples, if there are not a sufficiently high number of images of the object within the environment used in training, the model will not perform well because the model will not be able to detect the object as well because the model won't have a sufficient number of variances of the object.

To address these challenges, generative artificial intelligence (AI) large and language model(s) (LLM(s)) can be used to generate a synthetic image dataset including visual examples of a new object type based on a natural language description of the new object type and an object detection model can be fine-tuned after initial training using the synthetic image dataset to better detect the new object type. In examples, vehicles or other hardware performing reconnaissance, search and rescue, or otherwise can utilize fine-tuned models for object detection systems. In examples, systems and methods described herein can be used for in various use-cases, such as: (1) searching for area or location of an environmental incident, disaster, or infrastructure issue; (2) detecting units using new type of camouflage or new units with vague description; and/or (3) searching for location with properties partially known from audio and/or video recording. In examples, current equipment of operating vehicles can be used with cameras and displays for input and output. In examples where a vehicle is already equipped with an existing object detection AI mode, it is likely that the currently equipped model can be fine-tuned according to methodologies described herein.

In examples, if a vehicle is equipped with connectivity means, the new capabilities can be deployed remotely, but manual offline installation is possible as well. In examples, while relatively minor modifications to software is necessary to implement this methodology, the hardware of the systems already running object detection AI models will not require an upgrade in many cases. In examples, this methodology can be used across any system equipped with cameras or other visual sensors that would benefit from automated object detection and often need to detect a new target object type that was not previously observed, but can be described in words. In examples, such systems may include static surveillance systems, exploration systems, or similar systems with variable conditions.

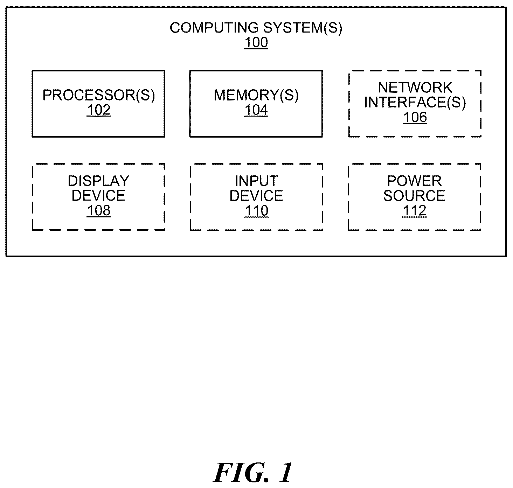

Figure 1 is a block diagram illustrating example computing system(s) 100. The computing system(s) 100 includes at least one processor 102, at least one memory 104, optional at least one network interface 106, optional at least one display device 108, optional at least one input device 110, and optional at least one power source 112.

In examples, the at least one processor 102 can be any known processor, such as a general purpose processor (GPP) or special purpose (such as a field-programmable gate array (FPGA), Tensor Processing Unit (TPU), application-specific integrated circuit (ASIC) or other integrated circuit or circuitry), any programmable logic device, or any circuitry. In examples, the at least one processor 102 may comprise a dedicated accelerated computing unit that provides improved parallelization and inference over a Central Processing Units (CPUs). In examples, a Commercial-Off- The-Shelf (COTS) ASIC may have better performance and power efficiency, but may be limited by a fixed architecture that potentially limits the range of applicable Neural Networks (NN). In examples, an FPGA solution may be more flexible, allowing complete reprograming of the FPGA's architecture in the field to fit a different type of a NN or to adapt the performance to suit the Low-rank Adaptation (LoRA) properties of the uploaded model as needed. In examples, the architecture does not currently need to be changed, but could be changed to adapt to evolving scenarios and requirements. In examples using more adaptable hardware, the NN in use does not need to be completely replaced, only fine-tuned.

In examples, the at least one memory 104 can be any device, mechanism, or populated data structure used for storing information. In examples, the at least one memory 104 can be or include any type of volatile memory, nonvolatile memory, and/or dynamic memory. In examples, the at least one memory 104 can be random access memory, memory storage devices, optical memory devices, magnetic media, floppy disks, magnetic tapes, hard drives, erasable programmable read-only memories (EPROMs), electrically erasable programmable read-only memories (EEPROMs), optical media (such as compact discs, DVDs, Blu-ray Discs) and/or the like.

In examples, any of the functionality disclosed herein may be implemented by the at least one processor 102 and the at least one memory 104.

In accordance with some embodiments, the at least one memory 104 may include one or more disk drives, flash drives, one or more databases, one or more tables, one or more files, local cache memories, processor cache memories, relational databases, flat databases, and/or the like. In addition, those of ordinary skill in the art will appreciate many additional devices and techniques for storing information, which can be used as the at least one memory 104. The at least one memory 104 may be used to store instructions for running one or more applications or modules on the at least one processor 102. In examples, the at least one memory 104 could be used in one or more examples to house all or some of the instructions needed to execute the functionality discussed herein.

In examples, the optional at least one network interface 106 includes or is coupled to at least one optional antenna for communication with a network. In examples, the optional at least one network interface 106 includes at least one of an Ethernet interface, a cellular radio access technology (RAT) radio, a Wi-Fi radio, a Bluetooth radio, or a near field communication (NFC) radio. In examples, the optional at least one network interface 106 includes a cellular radio access technology radio configured to establish a cellular data connection (mobile Internet) of sufficient speeds with a remote server using a local area network (LAN) or a wide area network (WAN). In examples, the cellular radio access technology includes at least one of Personal Communication Services (PCS), Specialized Mobile Radio (SMR) services, Enhanced Special Mobile Radio (ESMR) services, Advanced Wireless Services (AWS), Code Division Multiple Access (CDMA), Global System for Mobile Communications (GSM) services, Wideband Code Division Multiple Access (W-CDMA), Universal Mobile Telecommunications System (UMTS), Worldwide Interoperability for Microwave Access (WiMAX), 3rd Generation Partnership Projects (3GPP) Long Term Evolution (LTE), High Speed Packet Access (HSPA), third generation (3G) fourth generation (4G), fifth generation (5G), etc. or other appropriate communication services or a combination thereof. In examples, the optional at least one network interface 106 includes a Wi-Fi (IEEE 802.11) radio configured to communicate with a wireless local area network that communicates with the remote server, rather than a wide area network. In examples, the optional at least one network interface 106 includes a near field radio communication device that is limited to close proximity communication, such as a passive near field communication (NFC) tag, an active near field communication (NFC) tag, a passive radio frequency identification (RFID) tag, an active radio frequency identification (RFID) tag, a proximity card, or other personal area network device.

In examples, the optional at least one display device 108 includes at least one of a light emitting diode (LED), a liquid crystal display (LCD), a light emitting diode (LED) display, an organic light emitting diode (OLED) display, an e-ink display, a field emission display (FED), a surface-conduction electron-emitter display (SED), or a plasma display. In examples, the optional at least one input device 110 includes at least one of a touchscreen (including capacitive and resistive touchscreens), a touchpad, a capacitive button, a mechanical button, a switch, a dial, a keyboard, a mouse, a camera, a biometric sensor/scanner, a microphone, etc. In examples, the optional at least one display device 108 is combined with the optional at least one input device 110 into a human machine interface (HMI) for user interaction with the computing system(s) 100. In examples, optional at least one power source 112 is used to provide power to the various components of the computing system(s) 100.

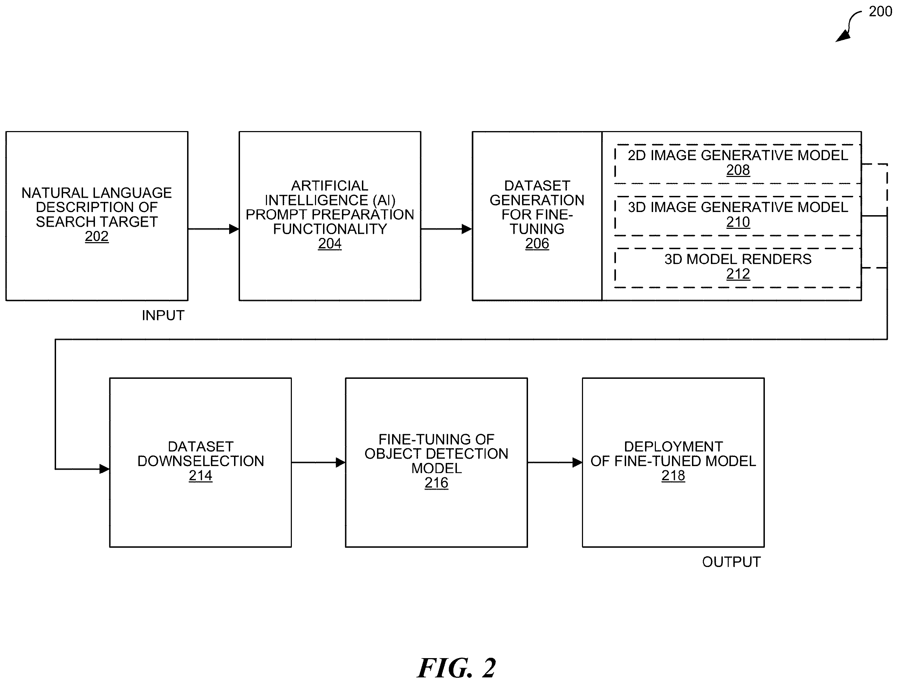

Figure 2 is a block diagram showing functional components of a system 200 for fine-tuning an object detection model. In examples, any of the functional components of the system 200 can be implemented using any of the physical components and/or circuitry of example computing system(s) 100 described herein. In examples, the system 200 receives a natural language description (as unstructured text) of the search target 202 as an input into an artificial intelligence (AI) prompt preparation functionality 204. In examples, the AI prompt preparation functionality 204 generates an AI prompt based on the natural language description of the search target 202. In examples, the AI prompt preparation functionality 204 implements a large language model to generate the AI prompt based on the natural language description of the search target 202. In examples, the AI prompt preparation functionality 204 transforms the natural language description of the search target 202 into at least one structured prompt (in a specific format) at the input of the system 200. In examples, the at least one structured prompt comprises multiple concurrent prompts. In examples, the at least one structured prompt is used by a generative model to create synthetic data to fine-tune a dataset.

In examples, the structured prompt is expected to include various elements of a specification. In examples, the structured prompt includes information about target object(s), such as the structure, components, size, and/or placement of the target object(s). In examples, the structured prompt includes information about target environment(s), such as landscape, light conditions, season, and seasonal conditions. In examples, the structured prompt includes information about target device(s), such as image capture device type, footage type (for example, aerial, automotive, etc.). In examples, the structured prompt includes information about surrounding object(s) or other surrounding specification(s), such as in the woods, in residential area, under the cliff, etc. In examples, the structured prompt includes information about relative position(s) to target(s), such as helicopter footage from low altitude, top-down view, horizontal telescopic zoom, etc. In examples, the structured prompt includes information about optional trigger term(s) for Low-rank Adaptation (LoRA) to be used.

In examples, structured prompt(s) are configured to generate positive result samples (target object(s)). In examples, structured prompt(s) are configured to generate negative result samples (object(s) that are not target object(s)). In examples, either or both positive result samples and negative result samples are used to improve the training. In examples, negative result samples are generated by omitting key elements of the object that are present in generated images of the target object(s) from the prompt for the negative result samples, while maintaining the other conditions (such as environment, device, LoRA trigger, etc.). In examples, the negative result images are annotated as negative result samples to avoid their misuse as positive result samples that could compromise the training results.

In examples, the AI prompt is output from the AI prompt preparation functionality 204 to the dataset generation for fine-tuning functionality 206. In examples, the dataset generation for fine-tuning functionality 206 prepares an image dataset using two dimensional (2D) and/or three dimensions (3D) image generative AI model(s). In examples, the dataset generation for fine-tuning functionality 206 includes at least one of 2D image generative model(s) 208, 3D image generative model(s) 210, or 3D model render(s) 212. In examples, at least a subset of the image dataset is used for fine-tuning an object detection model.

In examples using 2D image generation, 2D generative model(s) 208 (such as diffusion models such as Stable Diffusion by Stability AI LTD or other diffusion models) can generate a high-fidelity image of the target object(s) based on the structured prompt(s) and/or other text prompt. In examples, while use of the model as-is may provide acceptable results, it is desirable to fine-tune the generative model with the image dataset from the target camera (optionally also environment) and use the fine-tuned version of the model for the dataset generation.

In examples using 3D model generation, 3D image generative model(s) 210 can generate a textured 3D mesh and combine the textured 3D mesh with preannotated background images from the real environment captured by the target camera, set object position, lighting, occlusion, and other properties based on the preannotated information, render the results, and export it as the 2D dataset. In examples using manually supplied 3D models, when the expected appearance of the object is known, the best result can be achieved by using 3D model render(s) 212 that are existing or manually created 3D models as the initial input instead of the generated 3D model.

In examples, combinations of multiple options can be used so the resulting variability of the dataset leads to better performance of the fine-tuned object detection model. In examples using a combination of 2D and 3D generated dataset, the structured prompt(s) text description(s) is converted to both 2D image(s) using the 2D generative model(s) 208 as well as 3D model(s) using the 3D image generative model(s) 210. In examples, generating the fine-tuning datasets in parallel using more than one approach enhances the dataset and may be selected as the default approach. In examples, both created datasets are then evaluated by baseline object detection model(s) and/or image analysis model(s) to evaluate the dataset quality. In examples, if the quality of the output differs significantly between multiple approaches, only the better-quality dataset(s) are selected for the fine-tuning. In examples, if the quality of the output does not differ significantly between the approaches(s), all the datasets can be used.

In examples using a combination of a 3D model and 2D generation on fine-tuned data, the combination of known and/or manually prepared 3D model render(s) 212 and 2D image generative model(s) 208 provides the means for expanding the variability of detections beyond the well-defined shape of the initial model. In examples, the dataset is generated with the use of the prepared 3D model rendered in target environment(s) and this data set is used both for the final fine-tuning of the object detection model, but also for the fine-tuning of the 2D image generative model. In examples, the fine-tuned generative model is then capable of generating the expanded dataset that covers additional variations of the object and its environment. In examples, the generative model is fine-tuned on well-defined model of the searched object and the generated dataset closely represents the object's appearance as well.

In examples, the generated synthetic dataset consists of the image(s) and respective annotation(s). In examples, as the annotation is mandatory for most of the object detection methods, a capability to automatically create annotations for the generated image (from the generation prompt and utilized components, optionally verified by follow-up image analysis step) provides additional value and simplifies preparatory steps for the fine-tuning process.

In examples, the dataset for fine-tuning is output from the dataset generation for fine-tuning functionality 206 to the dataset downselection functionality 214. In examples, the dataset downselection functionality 214 assesses and filters the dataset for fine-tuning to eliminate erroneous generation results from a downselected dataset. In examples, the generative AI outputs images that vary in features, composition, and overall quality even when the prompt stays the same (due to random noise initialization). In examples, part of the generated images can be erroneous and the downselection process helps achieve a higher accuracy of the fine-tuned model by avoiding or minimizing the inclusion of the erroneous images. In examples, there are multiple approaches to the downselection. In examples, a score is assigned to images by averaging individual scores of more assessment methods and selecting the required number of images based on this score. In examples, the selection can be adjusted based on the use-case and system components. In examples, the selection comprises mapping the output of each individual image assessment method to the confidence interval (such as a [0, 1] confidence interval with confidence between 0 and 1) and average the confidences for each image. In examples, the selection comprises discarding the images with the confidence below a defined threshold (such as 0.5 on the confidence interval). In examples, the selection comprises discarding the low-quality outlier images. In examples, this can be done for example by calculating the interquartile range and defining the low-quality threshold as subtracting a scaled interquartile range (such as 1.5 multiplied by the interquartile range) from the first quartile threshold.

In examples, if the number of selected images is too low for a fine-tuning of the object detection model, the image generation process is repeated until the sufficient number of images is obtained. In examples, the required number of images is a compromise in invested processing time and training quality, but the expectation is that approximately a hundred images are used for the Low-Rank Adaption (LoRA) fine-tuning. In examples, there are various methods and combinations of methods that can be utilized for confidence assessment. In examples, while the baseline object detection model is not trained to detect the new object type in the image, it provides the weighted detections of the supported object types. In examples, with the assumption that the similar objects trigger the similar patterns in confidences of other type detections, the outliers can be identified and discarded as the potential erroneous outputs. In examples where negative detection images were generated in addition to positive detection images, it is possible to focus on the object detection differences between these groups and set the weight based on it. In examples, the large language model (LLM) can be used to generate the image annotations and the annotation results are then compared to the image generation prompt and the match ration is provided as an output. In examples, the method expects access to the LLM and requires respective connectivity means.

In examples, the downselected dataset is output from the dataset downselection functionality 214 to the fine-tuning of the object detection model functionality 216. In examples, the fine-tuning of the object detection model functionality 216 adjusts the object detection model through additional training to add capability(s) of detecting new object type(s). In examples, the fine-tuning of the object detection model is performed using LoRA training. In examples, the fine-tuning of the object detection model comprises dividing the annotated dataset to train and test sets and setting default starting values for hyperparameters. In examples, the fine-tuning of the object detection model comprises freezing all the model's layers except up to the last several (such as five) layers. In examples, the fine-tuning of the object detection model comprises performing the training, monitoring the loss function and other metrics (such as IoU), and interrupting the training if the metrics don't indicate the expected trend. In examples, the fine-tuning of the object detection model comprises evaluating the training results on the test dataset and performing at least one of the following decision actions: (1) accepting the training results and proceeding with the model deployment; (2) adjusting the hyperparameters and repeating the performing and evaluating steps; (3) enriching the dataset by generating additional samples; and (4) switching from LoRA training to full model training (or adjusting the number of frozen layers) and continuing in training iterations. In examples, the optimal training results are achieved in case of expert-led training, the whole training process can be automated either by specifying the hyperparameter optimization conditions and decision points conditions or via LLM assistance constrained by limit conditions.

In examples, the fine-tuned model 218 is deployed. In examples, the fine-tuned model 218 is deployed to target vehicle(s) system(s) for use by the target vehicle(s) in live detection, such as during a mission. In examples, despite model interference (such as acquiring model outputs) requiring significantly less resources than training, execution on traditional embedded system hardware is not feasible as a much higher degree of parallelization is required to process image data in real time. In examples, the model is deployed on an embedded system featuring a dedicated processing unit. In examples, it is possible to update the model in-the-field on a hardware present directly onboard the vehicle, though this may be impractical considering the time constraints and power requirements of the fine-tuning process. In examples, a Low-rank Adaptation (LoRA) fine-tuning technique can be utilized and the updates can be delivered to an on-board neural network (NN). In examples, this approach fine-tunes and delivers only the minimal required part of the neural network (NN) to optimize the bandwidth spent to performance improvement ratio.

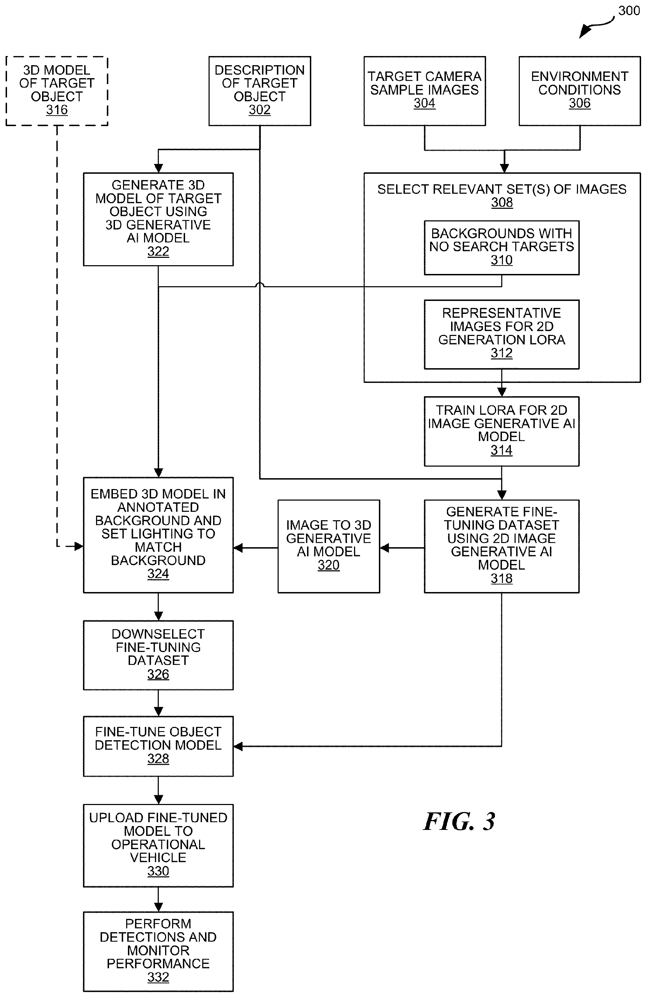

Figure 3 is a block diagram showing functional components of an example system 300 for fine-tuning an object detection model. In examples, any of the functional components of the system 200 can be implemented using any of the physical components, circuitry, and/or functionality of example computing system(s) 100 and/or system 200 described herein. In examples, the functionality of the operation of the system 300 is broken into three phases. In examples, elements 302, 304, 306, 308, 310, 312, 314, and/or 316 are part of the first phase where input data is received and selected/prepared. In examples, elements 318, 320, 322, and/or 324 are part of the second phase where the training data is generated. In examples, element 314 is part of both the first phase and the second phase. In examples, elements 326, 328, 330, and 332 are part of the third phase where fine-tuning and deployment occurs.

In examples, the first phase of the system 300 operation where input data is received and selected is performed initially ahead of mission use for multiple following missions with the equipment and environment within the set covered in the first phase execution. In the first phase, target camera sample images 304 from the target vehicle's camera are collected in the representative set of potential target environments and their variations in different lighting and seasons. In examples, the target camera sample images 304 are annotated with information regarding the camera and vehicle type used for the image capture. In examples, the images are annotated with information regarding the location and environment type (such as lighting and seasonal conditions) received as environment conditions 306. In examples, the images are annotated with information regarding the object(s) captured in the images.

In examples, select relevant set(s) of target camera sample images 304 functionality is used to select relevant set(s) of images from the target camera sample images 304. In examples, backgrounds with no search targets 310 are selected by the select relevant set(s) of target camera sample images 304 functionality and used by elements of the system 300 to have 3D object(s) embedded into images of the backgrounds with no search targets 310. In examples, representative images for 2D generation LoRA model(s) 312 are selected by the select relevant set(s) of target camera sample images 304 functionality. In examples, the representative images for 2D generation LoRA model(s) 312 are used by train LoRA for 2D image generative AI model 314 functionality to train 2D image generative AI model LoRA. In examples, the select relevant set(s) of target camera sample images 304 functionality prepares the LoRA model(s) using the annotated set of representative images for 2D generation LoRA model(s) 312 to adjust the image generation output to match the graphical properties of target device(s) and environment(s). In examples, a description of the target object 302 is received and subsequently provided to parts of the system 300 during the second phase. In examples, a 3D model of the target object 316 (if available) can also be received or generated and then subsequently provided to parts of the system 300 during the second phase. In examples, the first phase of the system 300 operation is expected to be performed once ahead of mission use for multiple following missions with the equipment and environment within the set covered in the first phase execution.

In examples, the second phase of the system 300 operation where training data is generated is performed on request for new object type support for object detection. In examples, the request for the new object type support for object detection may originate as part of a mission planning process or directly from the operating vehicle. In examples, the description of the search target is transformed to the AI generation prompt and the training sample generation pipelines are utilized to obtain several hundred images with the search object within the target environment and visual properties of the target camera. In examples, data from the first phase is used in this processing, including backgrounds with no search targets 310 and/or the representative images for 2D generation LoRA model(s) 312.

In examples, generate fine-tuning dataset using 2D image generative AI model 318 functionality generates a fine-tuning dataset using the representative images for 2D generation LoRA model(s) 312. In examples, the image to 3D generative AI model 320 functionality generates a 3D model based (such as a textured 3D mesh representing the searched object) on the fine-tuning dataset received from the generate fine-tuning dataset using 2D image generative AI model 318 functionality. In examples, the generated 2D images from the 2D image generative AI model 318 functionality can be directly used for the fine-tune the object detection model 328 functionality described in more detail below. In examples, the generate 3D model of target using 3D generative AI model 322 functionality generates a 3D model of the target object based on the description of the target object 302. In examples, the embed 3D model in annotated background and set lighting to match background 324 functionality is configured to receive 3D model(s) from the image to 3D generative AI model 320 functionality, the generate 3D model of target using 3D generative AI model 322 functionality, and/or the optional 3D model of the target object 316 and to embed the 3D model into the annotated background and set lighting to match the background.

In examples, the third phase of the system 300 operation where fine-tuning and deployment occurs using a semi-automated or fully-automated training process that may use multiple iterations until the object detection model with high-accuracy detection potential is obtained. In examples, the object detection model is deployed to the target vehicle and used offline in a mission for live detections onboard of the vehicle. In examples, the selection of the training and test dataset from the generated images occurs at the downselect the fine-tuning dataset 326 functionality. In examples, the downselected training and test dataset if used to fine-tune the object detection model at the fine-tune the object detection model 328 functionality. In examples, the generated 2D images from the 2D image generative AI model 318 functionality can be directly used for the fine-tune the object detection model 328 functionality. In examples, the image to 3D generative AI model 320 functionality and the embed 3D model in annotated background and set lighting to match background 324 functionality are not necessary when the 2D images from the 2D image generative AI model 318 functionality are directly used by the fine-tune the object detection model 328 functionality. In examples, the fine-tuned model is deployed to the operational vehicle at the upload the fine-tuned model to the operational vehicle 330 functionality. In examples, the operation vehicle uses the fine-tuned object detection model at the perform detections and monitor performance 332 functionality.

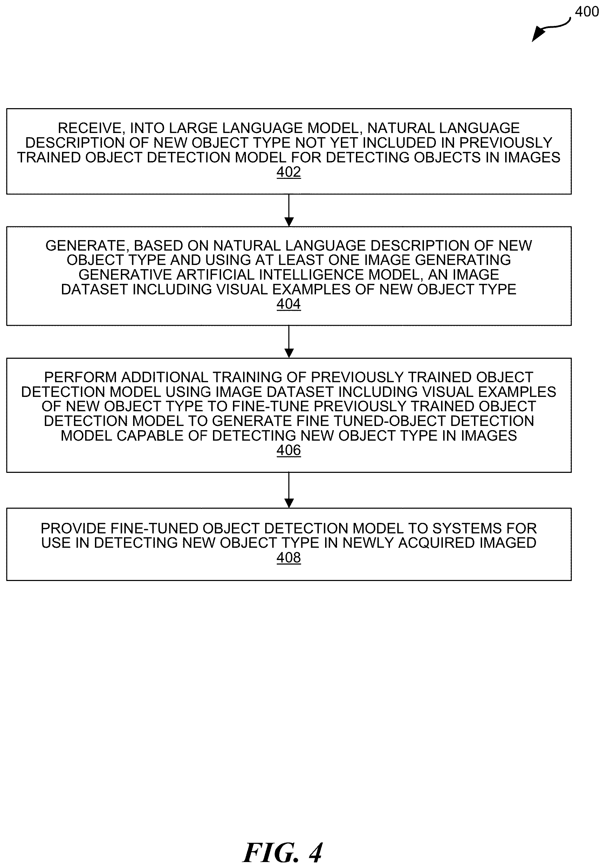

Figure 4 is an example method 400 for fine-tuning object detection models. In examples, the example method 400 is executed using any of the physical components, circuitry, and/or functionality of example computing system(s) 100 and/or system 200 described herein. In examples, method 400 begins at block 402 with receiving, into a large language model, a natural language description of a new object type not yet included in a previously trained object detection model for detecting objects in images.

In examples, method 400 proceeds to block 404 with generating, based on the natural language description of the new object type and using at least one image generating generative artificial intelligence model, an image dataset including visual examples of the new object type.

In examples, method 400 proceeds to block 406 with performing additional training of the previously trained object detection model using the image dataset including the visual examples of the new object type to fine-tune the previously trained object detection model to generate a fine-tuned object detection model capable of detecting the new object type in the images.

In examples, method 400 proceeds to block 408 with providing the fine-tuned object detection model to systems for use in detecting the new object type in newly acquired images.

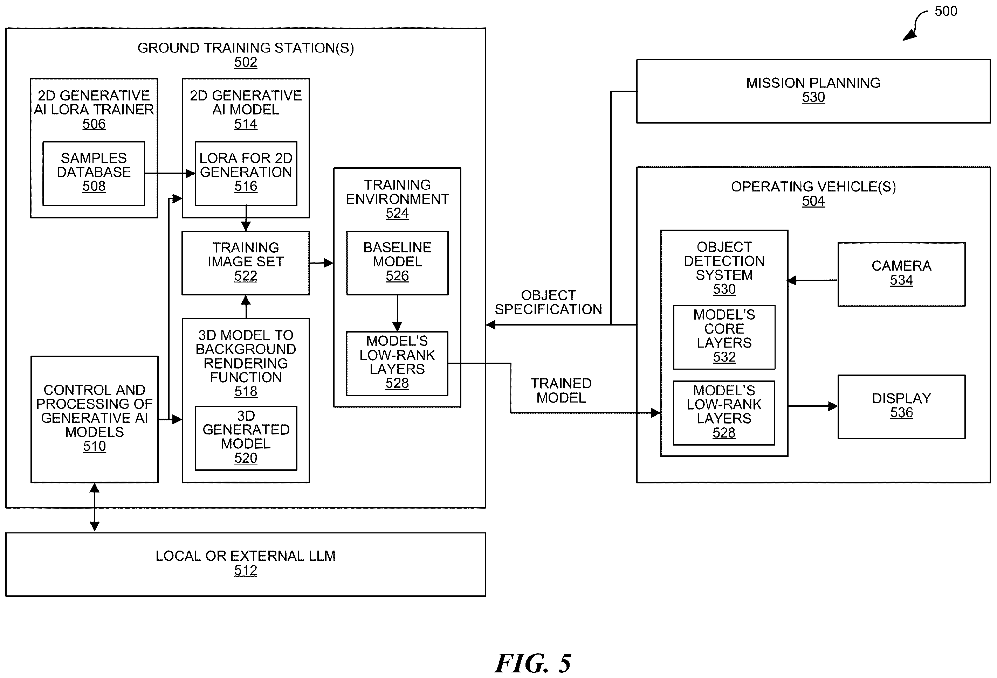

Figure 5 is a block diagram showing functional components of a system 500. In examples, any of the functional components of the system 500 can be implemented using any of the physical components and/or circuitry of example computing system(s) 100 described herein. In examples, the system 500 comprises at least one ground training station 502 and at least one operating vehicle 504. In examples, there the various components of the at least one ground training station 502 and at least one operating vehicle can be allocated differently, such as all in the at least one operating vehicle 504 or otherwise. In examples, the object detection model is hosted at the at least one operating vehicle 504, connected to a vehicle camera as an input device and a vehicle display as an output device. In examples, the model fine-tuning functionality is at the at least one ground training station 502.

In examples, the at least one ground training station 502 comprises a 2D generative AI LoRA trainer 506 having a samples database 508. In examples, the at least one ground training station 502 comprises a control and processing of generative AI models 510 functionality that communicates with a local or external Large Language Model (LLM) 512.

In examples, the at least one ground training station 502 comprises a 2D generative AI model 514 having a LoRA for 2D generation 516. In examples, the at least one ground training station 502 comprises a 3D model to background rendering function 518 having a 3D generated model 520. In examples, the 2D generative AI model 514 and/or the 3D model to background rendering function 518 are controlled by the control and processing of generative AI models 510 functionality. In examples, the 3D generative AI model 514 and/or the 3D model to background rendering function 518 generate a training image set 522.

In examples, the at least one ground training station 502 comprises a training environment 524 that generates a baseline model 526 based on the training image set 522. In examples, the training environment 524 also fine-tunes the low-rank layers 528 of the model based on an target object specification received from a mission planning 530 functionality and/or the at least one operating vehicle 504. In examples, the baseline model 526 and subsequently fine-tuned model or the low-rank layers 528 of the fine-tuned model are provided to at least one operating vehicle 504 for use in object detection.

In examples, the at least one operating vehicle 504 comprises an object detection system 532 that can store the core layers 534 of the model and the low-rank layers 528 to perform the object detection. In examples, the core layers 534 are provided from the at least one ground training station 502 after the baseline model 526 is trained and then after fine-tuning the updated fine-tuned model or the low-rank layers 528 of the fine-tuned model are provided from the at least one ground training station 502 to improve object detection of specific objects included in fine-tuning. IN examples, the at least one operating vehicle 504 includes at least one camera 536 used by the object detection system 532 and at least one display 538 for outputting information form the object detection system 532.

The methods and techniques described herein may be implemented in digital electronic circuitry, or with a programmable processor (for example, a specialpurpose processor or a general-purpose processor such as a computer) firmware, software, or in various combinations of each. Apparatus embodying these techniques may include appropriate input and output devices, a programmable processor, and a storage medium (such as a non-transitory computer-readable medium) tangibly embodying program instructions for execution by the programmable processor. A process embodying these techniques may be performed by a programmable processor executing a program of instructions to perform desired functions by operating on input data and generating appropriate output. The techniques may advantageously be implemented in one or more programs that are executable on a programmable system including at least one programmable processor coupled to receive data and instructions from, and to transmit data and instruction to, a data storage system, at least one input device, and at least one output device. Generally, a processor will receive instructions and data from a read-only memory and/or a random-access memory. Storage devices suitable for tangibly embodying computer program instructions (such as a non-transitory computer-readable medium) and data include all forms of non-volatile memory and storage media, including by way of example random access memory, memory storage devices, optical memory devices, magnetic media, floppy disks, magnetic tapes, hard drives, erasable programmable read-only memories (EPROMs), electrically erasable programmable read-only memories (EEPROMs), optical media (such as compact discs, DVDs, Blu-ray Discs), magnetooptical disks, and/or the like. Any of the foregoing may be supplemented by, or incorporated in, any known processor, such as a general purpose processor (GPP) or special purpose (such as a field-programmable gate array (FPGA), application-specific integrated circuit (ASIC) or other integrated circuit or circuitry), any programmable logic device, and/or any other circuitry.

While detailed descriptions of one or more embodiments of the disclosure have been given above, various alternatives, modifications, and equivalents will be apparent to those skilled in the art without varying from the spirit of the disclosure. For example, while the embodiments described above refer to particular features, the scope of this disclosure also includes embodiments having different combinations of features and embodiments that do not include all of the described features. Accordingly, the scope of the present disclosure is intended to embrace all such alternatives, modifications, and variations as fall within the scope of the claims, together with all equivalents thereof. Therefore, the above description should not be taken as limiting.

### Examples

Example 1 includes a system, comprising: at least one processor; at least one memory communicatively coupled to the at least one processor; and wherein the at least one processor is configured to: receive, into a large language model, a natural language description of a new object type not yet included in a previously trained object detection model for detecting objects in images; generate, based on the natural language description of the new object type and using at least one image generating generative artificial intelligence model, an image dataset including visual examples of the new object type; perform additional training of the previously trained object detection model using the image dataset including the visual examples of the new object type to fine-tune the previously trained object detection model to generate a fine-tuned object detection model capable of detecting the new object type in the images; and provide the fine-tuned object detection model to systems for use in detecting the new object type in newly acquired images.

Example 2 includes the system of Example 1, wherein the at least one processor is configured to generate the image dataset including the visual examples of the new object type at least in part by being configured to: generate a structured prompt describing the new object type based on the natural language description of the new object type.

Example 3 includes the system of Example 2, wherein the structured prompt includes information regarding at least one of an image capture device type, footage type, surrounding objects, surrounding specifications, or a relative position to a target.

Example 4 includes the system of any of Examples 2-3, wherein the at least one processor is configured to generate the image dataset including the visual examples of the new object type at least in part by being configured to: generate, using the at least one image generating generative artificial intelligence model prompted by the structured prompt describing the new object type, the image dataset including the visual examples of the new object type.

Example 5 includes the system of any of Examples 2-4, wherein the at least one processor is configured to generate the image dataset including the visual examples of the new object type at least in part by being configured to: generate at least one high fidelity image of the new object type based on the structured prompt describing the new object type; generate a textured three dimensional mesh based on the structured prompt describing the new object type and combine the textured three dimensional mesh with background images from a real world environment captured by a camera; or use a three dimensional model representing the new object type.

Example 6 includes the system of any of Examples 1-5, wherein the at least one processor is configured to generate the image dataset including the visual examples of the new object type at least in part by being configured to: generate, using a Large Language Model (LLM), a structured prompt describing the new object type based on the natural language description of the new object type; and generate, using the at least one image generating generative artificial intelligence model prompted by the structured prompt describing the new object type, the image dataset including the visual examples of the new object type.

Example 7 includes the system of any of Examples 1-6, wherein the at least one processor is further configured to: generate, based on the natural language description of the new object type and using the at least one image generating generative artificial intelligence model, a second image dataset including second visual examples not representing the new object type.

Example 8 includes the system of Example 7, wherein the at least one processor is further configured to: perform the additional training of the previously trained object detection model using the second image dataset including the second visual examples not representing the new object type to fine-tune the previously trained object detection model to generate the fine-tuned object detection model capable of detecting the new object type in the images.

Example 9 includes a method for fine-tuning object detection models, the method comprising: receiving, into a large language model, a natural language description of a new object type not yet included in a previously trained object detection model for detecting objects in images; generating, based on the natural language description of the new object type and using at least one image generating generative artificial intelligence model, an image dataset including visual examples of the new object type; performing additional training of the previously trained object detection model using the image dataset including the visual examples of the new object type to fine-tune the previously trained object detection model to generate a fine-tuned object detection model capable of detecting the new object type in the images; and providing the fine-tuned object detection model to systems for use in detecting the new object type in newly acquired images.

Example 10 includes the method of Example 9, wherein generating the image dataset including the visual examples of the new object type comprises: generating a structured prompt describing the new object type based on the natural language description of the new object type.

Example 11 includes the method of Example 10, wherein the structured prompt includes information regarding at least one of an image capture device type, footage type, surrounding objects, surrounding specifications, or a relative position to a target.

Example 12 includes the method of any of Examples 10-11, wherein generating the image dataset including the visual examples of the new object type comprises: generating, using the at least one image generating generative artificial intelligence model prompted by the structured prompt describing the new object type, the image dataset including the visual examples of the new object type.

Example 13 includes the method of any of Examples 10-12, wherein generating the image dataset including the visual examples of the new object type comprises: generating at least one high fidelity image of the new object type based on the structured prompt describing the new object type; generating a textured three dimensional mesh based on the structured prompt describing the new object type and combine the textured three dimensional mesh with background images from a real world environment captured by a camera; or using a three dimensional model representing the new object type.

Example 14 includes the method of any of Examples 10-13, wherein generating the image dataset including the visual examples of the new object type comprises: generating, using a Large Language Model (LLM), a structured prompt describing the new object type based on the natural language description of the new object type; and generating, using the at least one image generating generative artificial intelligence model prompted by the structured prompt describing the new object type, the image dataset including the visual examples of the new object type.

Example 15 includes the method of any of Examples 10-14, further comprising: generating, based on the natural language description of the new object type and using the at least one image generating generative artificial intelligence model, a second image dataset including second visual examples not representing the new object type.

Example 16 includes the method of Example 15, further comprising: performing the additional training of the previously trained object detection model using the second image dataset including the second visual examples not representing the new object type to fine-tune the previously trained object detection model to generate the fine-tuned object detection model capable of detecting the new object type in the images.

Example 17 includes a non-transitory computer-readable medium comprising a set of instructions that, when executed by at least one processor, cause the at least one processor to: receive, into a large language model, a natural language description of a new object type not yet included in a previously trained object detection model for detecting objects in images; generate, based on the natural language description of the new object type and using at least one image generating generative artificial intelligence model, an image dataset including visual examples of the new object type; perform additional training of the previously trained object detection model using the image dataset including the visual examples of the new object type to fine-tune the previously trained object detection model to generate a fine-tuned object detection model capable of detecting the new object type in the images; and provide the fine-tuned object detection model to systems for use in detecting the new object type in newly acquired images.

Example 18 includes the non-transitory computer-readable medium of Example 17, wherein the set of instructions cause the at least one processor to generate the image dataset including the visual examples of the new object type at least in part by being configured to: generate, using a Large Language Model (LLM), a structured prompt describing the new object type based on the natural language description of the new object type; and generate, using the at least one image generating generative artificial intelligence model prompted by the structured prompt describing the new object type, the image dataset including the visual examples of the new object type.

Example 19 includes the non-transitory computer-readable medium of any of Examples 17-18, wherein the set of instructions further cause the at least one processor to: generate, based on the natural language description of the new object type and using the at least one image generating generative artificial intelligence model, a second image dataset including second visual examples not representing the new object type.

Example 20 includes the non-transitory computer-readable medium of Example 19, wherein the set of instructions further cause the at least one processor to: perform the additional training of the previously trained object detection model using the second image dataset including the second visual examples not representing the new object type to fine-tune the previously trained object detection model to generate the fine-tuned object detection model capable of detecting the new object type in the images.

## Claims

1. A system, comprising:
at least one processor;
at least one memory communicatively coupled to the at least one processor; and
wherein the at least one processor is configured to:
receive, into a large language model, a natural language description of a new object type not yet included in a previously trained object detection model for detecting objects in images;
generate, based on the natural language description of the new object type and using at least one image generating generative artificial intelligence model, an image dataset including visual examples of the new object type;
perform additional training of the previously trained object detection model using the image dataset including the visual examples of the new object type to fine-tune the previously trained object detection model to generate a fine-tuned object detection model capable of detecting the new object type in the images; and
provide the fine-tuned object detection model to systems for use in detecting the new object type in newly acquired images.

2. The system of claim 1, wherein the at least one processor is configured to generate the image dataset including the visual examples of the new object type at least in part by being configured to:
generate a structured prompt describing the new object type based on the natural language description of the new object type.

3. The system of claim 2, wherein the structured prompt includes information regarding at least one of an image capture device type, footage type, surrounding objects, surrounding specifications, or a relative position to a target.

4. The system of claim 2, wherein the at least one processor is configured to generate the image dataset including the visual examples of the new object type at least in part by being configured to:
generate, using the at least one image generating generative artificial intelligence model prompted by the structured prompt describing the new object type, the image dataset including the visual examples of the new object type.

5. The system of claim 2, wherein the at least one processor is configured to generate the image dataset including the visual examples of the new object type at least in part by being configured to:
generate at least one high fidelity image of the new object type based on the structured prompt describing the new object type;
generate a textured three dimensional mesh based on the structured prompt describing the new object type and combine the textured three dimensional mesh with background images from a real world environment captured by a camera; or
use a three dimensional model representing the new object type.

6. The system of claim 1, wherein the at least one processor is configured to generate the image dataset including the visual examples of the new object type at least in part by being configured to:
generate, using a Large Language Model (LLM), a structured prompt describing the new object type based on the natural language description of the new object type; and
generate, using the at least one image generating generative artificial intelligence model prompted by the structured prompt describing the new object type, the image dataset including the visual examples of the new object type.

7. The system of claim 1, wherein the at least one processor is further configured to:
generate, based on the natural language description of the new object type and using the at least one image generating generative artificial intelligence model, a second image dataset including second visual examples not representing the new object type.

8. The system of claim 7, wherein the at least one processor is further configured to:
perform the additional training of the previously trained object detection model using the second image dataset including the second visual examples not representing the new object type to fine-tune the previously trained object detection model to generate the fine-tuned object detection model capable of detecting the new object type in the images.

9. A method for fine-tuning object detection models, the method comprising:
receiving, into a large language model, a natural language description of a new object type not yet included in a previously trained object detection model for detecting objects in images;
generating, based on the natural language description of the new object type and using at least one image generating generative artificial intelligence model, an image dataset including visual examples of the new object type;
performing additional training of the previously trained object detection model using the image dataset including the visual examples of the new object type to fine-tune the previously trained object detection model to generate a fine-tuned object detection model capable of detecting the new object type in the images; and
providing the fine-tuned object detection model to systems for use in detecting the new object type in newly acquired images.

10. The method of claim 9, wherein generating the image dataset including the visual examples of the new object type comprises:
generating a structured prompt describing the new object type based on the natural language description of the new object type; and
generating, using the at least one image generating generative artificial intelligence model prompted by the structured prompt describing the new object type, the image dataset including the visual examples of the new object type.
